(19) **Europäisches Patentamt / European Patent Office / Office européen des brevets**

(11) **EP 3 221 958 B1**

(12) **FASCICULE DE BREVET EUROPEEN**

(45) Date de publication et mention
de la délivrance du brevet:
**16.09.2020 Bulletin 2020/38**

(21) Numéro de dépôt: **15797129.2**

(22) Date de dépôt: **26.10.2015**

(51) Int Cl.:
***H02P 21/13*** *(2006.01)*

(86) Numéro de dépôt international:
**PCT/FR2015/052873**

(87) Numéro de publication internationale:
**WO 2016/079394 (26.05.2016 Gazette 2016/21)**

(54) **PROCÉDÉ DE COMMANDE D'UNE MACHINE ÉLECTRIQUE SYNCHRONE À ROTOR BOBINÉ**

VERFAHREN ZUR STEUERUNG EINER ELEKTRISCHEN SYNCHRONMASCHINE MIT EINEM GEWICKELTEN ROTOR

METHOD FOR CONTROLLING A SYNCHRONOUS ELECTRIC MACHINE WITH A WOUND ROTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.11.2014 FR 1461121**

(43) Date de publication de la demande:
**27.09.2017 Bulletin 2017/39**

(73) Titulaire: **Renault S.A.S.**
**92100 Boulogne-Billancourt (FR)**

(72) Inventeurs:
• **KOTEICH Mohamad**
  **91440 BURES SUR YVETTE (FR)**
• **MALOUM, Abdelmalek**
  **94550 Chevilly La Rue (FR)**
• **DUC, Gilles**
  **78830 Bullion (FR)**
• **SANDOU, Guillaume**
  **91400 Gometz La Ville (FR)**

(56) Documents cités:
**CN-A- 102 983 806**    **CN-B- 102 437 813**
**US-A1- 2005 007 044**    **US-A1- 2007 194 742**
**US-A1- 2013 289 934**

**Description**

L'invention a pour domaine technique la commande de machines électriques et plus particulièrement la commande de machines électriques synchrones à rotor bobiné.

La commande avancée des machines électriques triphasées nécessite une bonne connaissance de la position du rotor de la machine. Pour réaliser cela, un capteur de position, appelé résolveur, est branché sur l'arbre du moteur. La valeur de l'angle rotorique mesurée est envoyée au contrôleur qui pilote le moteur. Pour plusieurs raisons (coût, fiabilité, encombrement...), on cherche à éliminer les capteurs mécaniques, et à les remplacer par des capteurs logiciels (observateurs/estimateurs) qui estiment la position et la vitesse du moteur à partir des mesures électriques (courants et tensions). En effet, les capteurs électriques sont beaucoup moins chers et moins encombrants que les capteurs mécaniques. Comme ils sont indispensables pour plusieurs raisons (sûreté de fonctionnement, asservissement de la boucle de courant, etc.) au fonctionnement du moteur, on cherche à en utiliser la présence, pour remplacer les capteurs mécaniques par des capteurs logiciels (algorithmes) qui, à partir de mesure des courants, estiment avec haute précision la position et la vitesse du rotor.

Dans le présent document, on s'intéresse tout particulièrement au cas des machines synchrones triphasées à rotor bobiné.

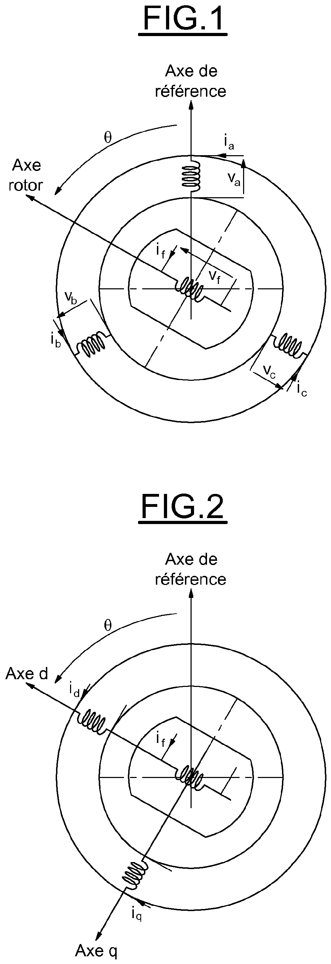

Un moteur synchrone à rotor bobiné comprend un stator triphasé et un rotor bobiné. Le stator triphasé (phases a, b et c) est construit de façon à générer un champ magnétique tournant. Le rotor bobiné comporte un bobinage alimenté par un courant continu (phase f). L'amplitude du champ créé dans l'entrefer est variable et réglable à travers le courant d'alimentation du rotor. La bobine rotorique est donc un électro-aimant qui cherche à s'aligner avec le champ magnétique tournant produit par le stator. Le rotor tourne à la même fréquence des courants statoriques, c'est pourquoi on l'appelle machine « synchrone ». Le schéma équivalent du moteur dans le repère triphasé est illustré par la figure 1.

Les inductances statoriques propres et mutuelles dépendent de la position $\theta$ du rotor non cylindrique (dit à « pôles saillants »). La commande de la machine se fait dans le repère de Park, qui est la transformée du repère statorique fixe par une transformation de rotation. Une telle transformation nécessite la connaissance de la valeur de l'angle rotorique $\theta$. La matrice de transformation de Park qui transforme les grandeurs triphasées (tensions $v_a$, $v_b$, $v_c$ et courants associés $i_a$, $i_b$, $i_c$) en grandeurs continues (tensions $v_d$, $v_q$, $v_0$ et courants $i_d$, $i_q$, $i_0$ sur le repère (d,q,0)) est :

$$P(\theta) = \begin{bmatrix} \cos\theta & \cos\left(\theta - \dfrac{2\pi}{3}\right) & \cos\left(\theta + \dfrac{2\pi}{3}\right) \\ -\sin\theta & -\sin\left(\theta - \dfrac{2\pi}{3}\right) & -\sin\left(\theta + \dfrac{2\pi}{3}\right) \\ \dfrac{\sqrt{2}}{2} & \dfrac{\sqrt{2}}{2} & \dfrac{\sqrt{2}}{2} \end{bmatrix} \qquad (\text{Eq. 1})$$

Le schéma équivalent du moteur dans le repère de Park est illustré par la figure 2 (les composantes homopolaires sont nulles vu que le système triphasé est équilibré).

Les techniques d'estimation utilisées, pour ce moteur, sont des techniques électroniques, basées sur l'injection des courants/tensions haute-fréquence dans les phases statoriques ou rotorique, ce qui nécessite des opérations supplémentaires (filtrage, démodulation, etc.).

Les techniques d'observation passive (basées sur la théorie d'observateur en automatique), moins complexes à implémenter du point de vue électronique, souffrent de la perte d'observabilité du moteur à basse vitesse et à vitesse nulle. Pour cette raison, il n'a pas été trouvé d'observateurs pour cette machine dans l'état de la technique antérieur.

Un problème à résoudre est de remplacer le capteur mécanique de position et de vitesse par un capteur logiciel.

Un autre problème à résoudre est de maintenir une observabilité à basse vitesse ou à vitesse nulle.

De l'état de la technique, on connaît les documents suivants.

Le document US 2013/0289934A1 décrit un procédé pour estimer le flux du stator à partir des signaux de la tension et des courants de la machine, servant ensuite à estimer le flux rotorique de la machine à partir du flux statorique. Le procédé comprend aussi la détermination de l'angle électrique et sa dérivée. Ce procédé s'applique uniquement à des machines asynchrones et n'est pas transposable aux machines à rotor bobiné.

Le document US 2007/0194742A1 décrit l'estimation du flux sans impliquer un observateur au sens propre du terme mais plutôt avec des signaux sinusoïdaux décalés.

Le document CN102983806 décrit une simple technique d'estimation du flux statorique.

Le document CN102437813 décrit une méthode pour remonter à l'angle et à la vitesse du rotor à partir du flux rotorique, pour une machine synchrone à aimant permanent. Par ailleurs, l'enseignement du document implique une utilisation extensive du filtrage physique au travers d'une extraction de la fondamentale de la tension et courant du rotor, Le document US2005/007044 montre l'utilisation d'un filtre de Kalman pour le contrôle d'un moteur synchrone

Un objet de l'invention est un procédé de commande d'une machine électrique synchrone à rotor bobiné pour véhicule automobile électrique ou hybride. Le procédé comprend des étapes au cours desquelles :

on mesure les courants et tensions au niveau des phases du rotor et du stator de la machine dans un repère triphasé fixe lié au stator,
on détermine les courants et tensions au niveau des phases du rotor et du stator dans un repère diphasé fixe lié au stator en fonction des mesures de courant et de tension dans le repère triphasé.

Le procédé comprend également des étapes au cours desquelles on détermine la position et la vitesse du rotor par rapport au stator par un observateur fonction des courants et des tensions statoriques et rotorique exprimés dans le repère diphasé fixe lié au stator, et on règle l'observateur par un algorithme de Kalman en version étendue discrète.

E lorsque la vitesse est inférieure à un seuil, on injecte un courant à haute fréquence et à faible intensité dans le bobinage rotorique afin de rendre le système observable, puis on détermine la position et la vitesse grâce à l'algorithme de Kalman en version étendue.

Le réglage de l'observateur par un algorithme de Kalman en version étendue discrète peut comprendre les étapes suivantes :

au cours d'une phase de prédiction, on détermine l'état du système et la matrice de covariance de l'erreur associée à l'itération suivante estimés à l'itération en cours, en fonction de la matrice de covariance de l'incertitude du système à l'itération en cours, de la matrice de covariance de l'erreur à l'itération en cours, de l'état estimé à l'itération en cours et du système linéarisé à l'itération en cours,
on détermine le gain de l'observateur à l'itération en cours en fonction de la matrice de covariance de l'erreur sur l'état à l'itération suivante estimée à l'itération en cours, de la matrice de covariance de bruit de mesures à l'itération en cours et du système linéarisé à l'itération en cours, et
on met à jour l'état du système à l'itération suivante en fonction, des dernières mesures déterminées, des grandeurs estimées correspondantes, du gain de l'observateur à l'itération en cours, et de l'état à l'itération suivante estimé à l'itération en cours.

On peut augmenter la dynamique de l'observateur lorsque l'on augmente les valeurs de la matrice de covariance de bruit du système.

On peut augmenter la précision de l'observateur en dépit de la rapidité, lorsque l'on augmente les valeurs de la matrice de covariance de bruit de mesures.

Le procédé de commande présente l'avantage d'un coût réduit du fait de l'absence de capteurs mécaniques, ou de pouvoir fonctionner en parallèle avec un capteur mécanique moins cher et moins précis que ceux généralement utilisés. Ceci augmente la fiabilité de la commande et en réduit également le coût.

Le procédé de commande présente également l'avantage d'une estimation de la position à vitesse nulle.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'une machine électrique synchrone à rotor bobiné dans un repère triphasé,
- la figure 2 illustre les principaux éléments d'une machine électrique synchrone à rotor bobiné dans le repère de Park, et

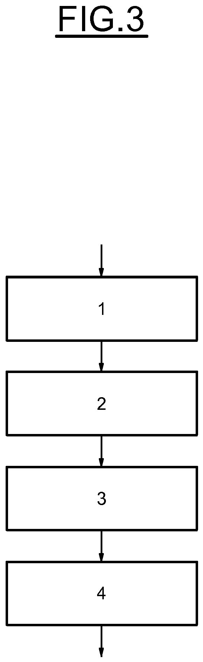

- la figure 3 illustre les principales étapes du procédé de commande selon l'invention.

Pour résoudre les problèmes techniques posés en introduction, on se base sur le modèle de la machine, et sur la théorie d'observateur.

On rappelle que la théorie d'observateur comprend les notions d'observabilité et d'observateur d'état.

Avant d'entamer une procédure de conception d'observateur pour un système dynamique, il est important et nécessaire de s'assurer que l'état de ce dernier peut être estimé à partir des informations sur l'entrée et la sortie. L'observabilité d'un système est la propriété qui permet de dire si l'état peut être déterminé uniquement à partir de la connaissance des signaux d'entrée et de sortie.

A la différence des systèmes linéaires, l'observabilité des systèmes non linéaires (comme la machine synchrone à rotor bobiné) est intrinsèquement liée aux entrées et aux conditions initiales. Lorsqu'un système non linéaire est observable, il se peut qu'il possède des entrées qui le rendent inobservable (entrées singulières) et annihilent toute stratégie d'observation.

En automatique et en théorie de l'information, un observateur d'état est une extension d'un modèle représenté sous forme de représentation d'état. Lorsque l'état d'un système n'est pas mesurable, on conçoit un observateur qui permet de reconstruire l'état à partir d'un modèle du système dynamique et des mesures d'autres états. On entend par état un ensemble de valeurs physiques définissant le système observé.

Plusieurs observateurs d'état peuvent être utilisés pour la commande des moteurs électriques sans capteur mécanique, parmi lesquels on cite le filtre de Kalman qui est utilisé dans une large gamme de domaines technologiques.

Le modèle de la machine synchrone à rotor bobiné est fortement non linéaire. Cela est dû au couplage entre les dynamiques des courants statoriques et rotorique, ainsi qu'à la dépendance des inductances statoriques de la position à cause de la saillance.

La machine électrique peut être modélisé dans un repère diphasé $(\alpha,\beta)$ en réalisant les projections des grandeurs du repère triphasé (a,b,c) sur un repère diphasé lié au stator. La matrice de transformation correspondant à une telle projection est la suivante. On note que les composantes homopolaires ne sont pas prises en compte.

$$C_{32} = \begin{bmatrix} 1 & -1/2 & -1/2 \\ 0 & \sqrt{3}/2 & -\sqrt{3}/2 \end{bmatrix} \qquad (\text{Eq. 2})$$

Les équations électromagnétiques du système dans ce repère peuvent être écrites de la façon suivante :

$$v_\alpha = R_s i_\alpha + \frac{d\psi_\alpha}{dt}$$

$$v_\beta = R_s i_\beta + \frac{d\psi_\beta}{dt}$$

$$v_f = R_f i_f + \frac{d\psi_f}{dt} \qquad (\text{Eq. 3})$$

Avec :

$v_\alpha$ : la tension appliquée au stator sur l'axe a (correspondant à la tension aux bornes d'un enroulement diphasé équivalent aux enroulements triphasés, sur l'axe a)
$v_\beta$ : la tension appliquée au stator sur l'axe $\beta$
$v_f$ : la tension rotorique
$i_\alpha$ : le courant circulant dans le stator sur l'axe a
$i_\beta$ : le courant circulant dans le stator sur l'axe $\beta$
$i_f$ : le courant rotorique
$\psi_\alpha$ : le flux électromagnétique statorique dans la phase équivalente sur l'axe a
$\psi_\beta$ : le flux électromagnétique statorique dans la phase équivalente sur l'axe $\beta$,
$\psi_f$ : le flux électromagnétique rotorique,
$R_s$ : la résistance statorique,
$R_f$ : la résistance rotorique.

Les flux sont déterminés par les équations suivantes :

$$\psi_\alpha = L_\alpha i_\alpha + L_{\alpha\beta} i_\beta + M_f i_f \cos\theta$$

$$\psi_\beta = L_{\alpha\beta} i_\alpha + L_\beta i_\beta + M_f i_f \sin\theta \qquad (\text{Eq. 4})$$

$$\psi_f = M_f i_\alpha \cos\theta + M_f i_\beta \sin\theta + L_f i_f$$

Ces équations peuvent être réécrites sous forme matricielle de la façon suivante :

$$\begin{bmatrix} \psi_\alpha \\ \psi_\beta \\ \psi_f \end{bmatrix} = \begin{bmatrix} L(\theta) \end{bmatrix} \begin{bmatrix} i_\alpha \\ i_\beta \\ i_f \end{bmatrix} \qquad (Eq.\ 5)$$

Avec

$$\begin{bmatrix} L(\theta) \end{bmatrix} = \begin{bmatrix} L_\alpha & L_{\alpha\beta} & M_f \cos\theta \\ L_{\alpha\beta} & L_\beta & M_f \sin\theta \\ M_f \cos\theta & M_f \sin\theta & L_f \end{bmatrix} \qquad (Eq.\ 6)$$

Où

$L_\alpha$ et $L_\beta$: les inductances cycliques des phases $\alpha$ et $\beta$.
$L_f$ : l'inductance propre du bobinage rotorique.
$M_f$ : l'inductance mutuelle maximale entre une phase statorique et la phase rotorique.
$L_{\alpha\beta}$ : l'inductance mutuelle entre les phases statoriques.

On connaît par ailleurs les relations suivantes liant les inductances cycliques et l'inductance mutuelle à la position $\theta$.

$$L_\alpha = L_0 + L_2 \cos 2\theta$$
$$L_\beta = L_0 - L_2 \cos 2\theta$$
$$L_{\alpha\beta} = L_2 \sin 2\theta \qquad (Eq.\ 7)$$

Les équations mécaniques de la machine électrique sont les suivantes :

$$J\frac{d\omega}{dt} = pC_m - pC_r - f_v\omega \qquad (Eq.\ 8)$$

Avec :

J : l'inertie du rotor avec la charge
p : le nombre de paires de pôles rotoriques
$C_m$ et $C_r$ : les couples moteur et résistant
$f_v$ : le coefficient de frottement visqueux

$$\omega = p*\Omega$$

p : le nombre de pôles de la machine
$\Omega$ : la vitesse de rotation du rotor

Le couple moteur est déterminé par l'équation suivante :

$$C_m = \frac{3p}{4} \begin{bmatrix} i_\alpha \\ i_\beta \\ i_f \end{bmatrix}^T \frac{d[L(\theta)]}{d\theta} \begin{bmatrix} i_\alpha \\ i_\beta \\ i_f \end{bmatrix}$$

(Eq. 9)

On modélise la machine électrique sous la forme suivante :

$$\frac{dI}{dt} = L(\theta)^{-1}(V - R_{eq}I)$$

$$\frac{d\omega}{dt} = J^{-1}(p^2 \frac{3}{4} I^T \frac{dL(\theta)}{d\theta} I - pC_r - f_v\omega)$$

$$\frac{d\theta}{dt} = \omega$$

(Eq. 10)

avec

$$I = \begin{bmatrix} i_\alpha \\ i_\beta \\ i_f \end{bmatrix} \quad V = \begin{bmatrix} v_\alpha \\ v_\beta \\ v_f \end{bmatrix}$$

(Eq. 11)

$$R_{eq} = R + \frac{d[L(\theta)]}{d\theta}\omega$$

(Eq. 12)

$$R = \begin{bmatrix} R_s & 0 & 0 \\ 0 & R_s & 0 \\ 0 & 0 & R_f \end{bmatrix}$$

(Eq. 13)

Le système d'équations Eq. 10 à Eq. 13 modélisant la machine électrique peut être reformulé sous la forme générale des systèmes non linéaires:

$$\frac{dx}{dt} = f(x,u)$$

$$y = h(x)$$

(Eq. 14)

Avec :

$$x = \begin{bmatrix} i_\alpha \\ i_\beta \\ i_f \\ \omega \\ \theta \end{bmatrix},$$ (Eq. 15)

$$u = \begin{bmatrix} v_\alpha \\ v_\beta \\ v_f \end{bmatrix}, \text{ et}$$ (Eq. 16)

$$y = \begin{bmatrix} i_\alpha \\ i_\beta \\ i_f \end{bmatrix} = h(x) = C.x = \begin{bmatrix} 1 & 0 & 0 & 0 & 0 \\ 0 & 1 & 0 & 0 & 0 \\ 0 & 0 & 1 & 0 & 0 \end{bmatrix} x$$ (Eq. 17)

Pour le système modélisé par les équations Eq. 14 à Eq. 17, on peut formaliser un observateur par l'équation suivante :

$$\frac{d}{dt}\hat{x} = f(\hat{x},u) + K(y - C.\hat{x})$$ (Eq. 18)

Avec

$\hat{x}$ : le vecteur des états estimés correspondant au vecteur d'état x défini par l'équation Eq. 15

K : Gain de l'observateur

Le choix du gain K, qui multiplie le terme d'erreur permet de régler l'observateur. Ce gain est calculé par l'algorithme de Kalman (version étendue discrète).

Afin de permettre la résolution numérique du système, il est linéarisé de la façon suivante.

$$A_k = \left.\frac{\partial f}{\partial x}\right|_{\hat{x}_{k-1},u_k}$$ (Eq. 19)

$$H_k = \left.\frac{\partial h}{\partial x}\right|_{\hat{x}_{k-1}}$$ (Eq. 20)

On calcule ainsi la forme analytique des matrices $A_k$ et $H_k$ qui sont, respectivement, les jacobiennes des fonctions f et h de l'équation Eq. 14 par rapport au vecteur x. Ces matrices sont très complexes de sorte qu'elles ne peuvent être écrites ici. Elles sont déterminées par calcul symbolique et transcrites directement dans le procédé.

Le procédé débute alors que les courants et tensions de la machine électrique ont été mesurés dans le repère triphasé et convertis dans le repère diphasé par application de la matrice Eq. 2.

Au cours d'une première étape 1, on utilise les valeurs des états (courants, vitesse et position) de l'itération précédente et les tensions mesurées pour calculer les valeurs des matrices $A_k$ et $H_k$ en fonction des expressions linéarisées de celles-ci (Eq. 19 et Eq. 20).

Au cours d'une deuxième étape 2, on réalise une phase de prédiction au cours de laquelle on détermine l'état du système à l'itération suivante en fonction des données disponibles à l'itération en cours. Les équations suivantes permettent de réaliser cette phase de prédiction :

$$\hat{x}_{k+1/k} = \hat{x}_{k/k} + T_s f(\hat{x}_{k/k}, u_k)$$
$$P_{k+1/k} = P_{k/k} + T_s (A_k P_{k/k} + P_{k/k} A_k^T) + Q_k$$

$$(\text{Eq. 21})$$

Avec

$T_s$ : période d'échantillonnage $P_{k/k}$ : matrice de covariance de l'erreur sur l'état à l'itération k estimée à l'itération $kP_{k+1/k}$ : matrice de covariance de l'erreur sur l'état à l'itération k estimée à l'itération k+1
$Q_k$ : matrice de covariance des incertitudes du système à l'itération k
k : le numéro d'itération

La matrice de covariance des incertitudes du système $Q_k$ rend compte des incertitudes dans la définition du système, dues par exemple à la méconnaissance du système, à l'approximation de la modélisation du système, ou à l'incertitude sur les valeurs employées dans la modélisation.

En d'autres termes, au cours de cette étape, on détermine l'état x du système à l'itération k+1 estimé à l'itération k en fonction notamment de l'état du système à l'itération k estimé à l'itération k.

Au cours d'une troisième étape 3, on calcule ensuite le gain de l'observateur :

$$K_k = P_{k+1/k} H_k^T (H_k P_{k-1/k} H_k^T + R_k)^{-1}$$

$$(\text{Eq. 22})$$

Avec
$R_k$ : matrice de covariance de bruits de mesures à l'itération k

Enfin, au cours d'une quatrième étape 4, on réalise une phase de mise à jour à posteriori au cours de laquelle on met à jour l'état du système à l'itération k+1 estimé à l'itération k+1 grâce à l'information des dernières mesures y et des grandeurs estimées correspondantes h(x) en fonction de l'état du système à l'itération k+1 déterminé à l'itération k. La fonction h(x) dépend directement de la modélisation du système (cf Eq. 14).Le système d'équations suivant rend compte de cette phase de mise à jour.

$$\hat{x}_{k+1/k+1} = \hat{x}_{k+1/k} + K_k . (y - h(\hat{x}_{k+1/k}))$$
$$P_{k+1/k-1} = P_{k+1/k} - K_K H_k . P_{k+1/k}$$

$$(\text{Eq. 23})$$

Au cours de cette étape, on détermine l'état x du système à l'itération k+1 estimé à l'itération k+1 en corrigeant l'état x du système à l'itération k+1 estimé à l'itération k en fonction du gain et d'un terme d'erreur dépendant de la matrice de covariance de l'erreur sur l'état à l'itération k+1 estimé à l'itération k et la matrice $H_k$, forme analytique de la jacobienne de la fonction h.

On obtient alors l'estimation de la vitesse et de la position qui sont réutilisées pour l'itération suivante dans l'observateur.

Ces estimations sont également transmises à la commande de la machine électrique (au régulateur ou boucles d'asservissement).

Les étapes du procédé décrites ci-dessus sont répétées afin de disposer de valeurs de position et de vitesse régulièrement mises à jour.

Le réglage du filtre se fait par le choix des matrices $Q_k$ et $R_k$ qui sont souvent prises constantes. La matrice $P_k$ doit être initialisée, toutefois, les valeurs initiales choisies n'affectent que la première itération et n'ont pas de conséquences notables sur le déroulement du procédé. Le choix des matrices dépend du système à observer, des paramètres du moteur et de l'environnement dans lequel fonctionne le moteur (bruits de mesure). Il n'existe pas une méthode systématique, mais les règles générales sont :

Si on augmente les valeurs de $Q_k$, on donne moins de confiance aux mesures, et la dynamique de l'observateur devient plus rapide.

Si on augmente les valeurs de la matrice $R_k$, on donne plus de confiance aux mesures, ce qui augmente la précision en dépit de la rapidité.

En règle générale, les matrices $Q_k$ et $R_k$ sont susceptibles de voir leurs valeurs modifiées d'une itération k à la suivante. Toutefois, la présente application ne requiert pas une telle modification. Par conséquent, les matrices $Q_k$ et $R_k$ sont maintenues constantes.

Les matrices suivantes sont employées dans le cas présent :

$$Q_k = \begin{bmatrix} 1 & 0 & 0 & 0 & 0 \\ 0 & 1 & 0 & 0 & 0 \\ 0 & 0 & 1 & 0 & 0 \\ 0 & 0 & 0 & 200 & 0 \\ 0 & 0 & 0 & 0 & 5 \end{bmatrix} \qquad (Eq.\ 24)$$

$$R_k = \begin{bmatrix} 1 & 0 & 0 \\ 0 & 1 & 0 \\ 0 & 0 & 1 \end{bmatrix} \qquad (Eq.\ 25)$$

Comme cela a été expliqué en introduction, l'estimation de l'état du système par observateur ne peut être employée à vitesse faible ou nulle.

L'étude d'observabilité de la machine à vitesse nulle fournit la condition d'observabilité suivante.

Le déterminant de la matrice d'observabilité doit être non nul. Le calcul du déterminant est une tâche difficile à cause de la complexité des équations. Le déterminant est :

$$\Delta_{|\omega=0} = \frac{2L_2L_f - M_f{}^2}{L_q(M_f{}^2 - L_d L_f)} \left[ (M_f i_f + 2L_2 i_d)\frac{di_q}{dt} - (2L_2\frac{di_d}{dt} + M_f\frac{di_f}{dt})i_q \right] \qquad (Eq.\ 26)$$

Avec :

$$L_d = L_0 + L_2$$

$$L_q = L_0 - L_2$$

$$i_d = i_\alpha \cos\theta + i_\beta \sin\theta$$

$$i_q = -i_\alpha \sin\theta + i_\beta \cos\theta$$

A vitesse nulle ($\theta$ = constante), et à courants $i_d$, $i_q$ et $i_f$ constants, le déterminant de la matrice d'observabilité est nul. On ne peut pas assurer l'observabilité de la machine. La condition d'observabilité est suffisante mais non nécessaire. Il apparaît ainsi que l'on perd l'observabilité sur la position mais que la vitesse reste toujours bien estimée.

La solution proposée pour remédier au problème de perte d'observabilité est d'injecter un courant HF (haute fréquence) dans le bobinage rotorique, de façon à avoir une dérivée du courant $i_f$ non nulle. Ceci est réalisé lors d'une étape, au cours de laquelle on détermine si la vitesse estimée est inférieure à un seuil et si tel est le cas, on injecte un courant haute fréquence dans le bobinage rotorique. Une telle injection peut également être effectuée au démarrage du système pour assurer une bonne estimation de la vitesse et de la position. Le déterminant de la matrice d'observabilité à vitesse nulle est alors non nul et la position peut être estimée. Ceci est réalisé au cours d'une étape 3. Par exemple, si la vitesse est inférieure à 10 rad/sec, on injecte un courant d'amplitude 50 mA, de fréquence 10kHz dans la bobine du rotor. Après injection du courant, on détermine la position à l'arrêt.

En s'appuyant sur le modèle de la machine, on réalise la synthèse d'un observateur d'état. La condition d'observabilité à vitesse nulle montre que le moteur perd l'observabilité si les courants $i_d$, $i_q$ et $i_f$ sont constants. La solution proposée pour assurer l'observabilité à vitesse nulle est d'injecter un courant à faible amplitude (d'ordre de dizaines de mA) à haute fréquence (d'ordre de dizaines de kHz) dans l'enroulement rotorique quand la vitesse passe en dessous d'un certain seuil en s'approchant du zéro, afin de retrouver l'observabilité de la position.

## Revendications

1. Procédé de commande d'une machine électrique synchrone à rotor bobiné pour véhicule automobile électrique ou hybride,

   comprenant des étapes au cours desquelles :

   on mesure les courants et tensions au niveau des phases du rotor et du stator de la machine dans un repère triphasé fixe lié au stator,
   on détermine les courants et tensions au niveau des phases du rotor et du stator dans un repère diphasé fixe lié au stator en fonction des mesures de courant et de tension dans le repère triphasé,
   le procédé comprend des étapes au cours desquelles on détermine la position et la vitesse du rotor par rapport au stator par un observateur fonction des courants et des tensions statoriques et rotorique exprimés dans le repère diphasé fixe lié au stator,
   on règle l'observateur par un algorithme de Kalman en version étendue discrète,
   le procédé est **caractérisé en ce que** lorsque la vitesse est inférieure à un seuil, on injecte un courant à haute fréquence et à faible intensité dans le bobinage rotorique afin de rendre le système observable, puis on détermine la position et la vitesse grâce à l'algorithme de Kalman en version étendue.

2. Procédé selon la revendication 1, dans lequel le réglage de l'observateur par un algorithme de Kalman en version étendue discrète comprend les étapes suivantes :

   au cours d'une phase de prédiction, on détermine l'état du système et la matrice de covariance de l'erreur associée à l'itération suivante estimés à l'itération en cours, en fonction de la matrice de covariance de l'incertitude du système à l'itération en cours, de la matrice de covariance de l'erreur sur l'état à l'itération en cours, de l'état estimé à l'itération en cours, et du système linéarisé à l'itération en cours,
   on détermine le gain de l'observateur à l'itération en cours en fonction de la matrice de covariance de l'erreur sur l'état à l'itération suivante estimée à l'itération en cours, de la matrice de covariance de bruit de mesures à l'itération en cours et du système linéarisé à l'itération en cours, et
   on met à jour l'état du système à l'itération suivante en fonction des dernières mesures déterminées, des grandeurs estimées correspondantes, du gain de l'observateur à l'itération en cours, et de l'état à l'itération suivante estimé à l'itération en cours.

3. Procédé selon la revendication 2, dans lequel on augmente la dynamique de l'observateur en augmentant les valeurs de la matrice de covariance de bruit du système.

4. Procédé selon la revendication 2, dans lequel on augmente la précision de l'observateur en dépit de la rapidité, en augmentant les valeurs de la matrice de covariance de bruit de mesures.

## Patentansprüche

1. Verfahren zur Steuerung einer elektrischen Synchronmaschine mit gewickeltem Rotor für ein Elektro- oder Hybridfahrzeug, das Schritte enthält, während denen:

   die Ströme und Spannungen im Bereich der Phasen des Rotors und des Stators der Maschine in einem mit dem Stator verbundenen ortsfesten dreiphasigen Bezugssystem gemessen werden,
   die Ströme und Spannungen im Bereich der Phasen des Rotors und des Stators der Maschine in einem mit dem Stator verbundenen ortsfesten zweiphasigen Bezugssystem abhängig von den Strom- und Spannungsmesswerten im dreiphasigen Bezugssystem bestimmt werden,
wobei das Verfahren Schritte enthält, während denen die Position und die Geschwindigkeit des Rotors bezüglich des Stators von einem Beobachter abhängig von den Statorströmen und -spannungen bestimmt werden, die im mit dem Stator verbundenen ortsfesten zweiphasigen Bezugssystem ausgedrückt werden,
wobei der Beobachter durch einen Kalman-Algorithmus in einer diskreten erweiterten Version geregelt wird,
wobei das Verfahren **dadurch gekennzeichnet ist, dass** wenn die Geschwindigkeit unter einer Schwelle liegt, ein Strom mit hoher Frequenz und niedriger Stärke in die Rotorwicklung eingespeist wird, um das System beobachtbar zu machen, dann die Position und die Geschwindigkeit mit Hilfe des Kalman-Algorithmus in erweiterter Version bestimmt werden.

2. Verfahren nach Anspruch 1, wobei die Regelung des Beobachters durch einen Kalman-Algorithmus in diskreter erweiterter Version die folgenden Schritte enthält:

während einer Vorhersagephase werden der Zustand des Systems und die Kovarianzmatrix des der folgenden Iteration zugeordneten Fehlers bestimmt, die in der laufenden Iteration geschätzt werden, abhängig von der Kovarianzmatrix der Ungewissheit des Systems in der laufenden Iteration, der Kovarianzmatrix des Fehlers über den Zustand in der laufenden Iteration, des geschätzten Zustands in der laufenden Iteration, und des linearisierten Systems in der laufenden Iteration,
die Verstärkung des Beobachters in der laufenden Iteration wird abhängig von der Kovarianzmatrix des Fehlers über den Zustand in der folgenden Iteration geschätzt in der laufenden Iteration, der Kovarianzmatrix von Messrauschen in der laufenden Iteration und dem linearisierten System in der laufenden Iteration bestimmt, und der Zustand des Systems in der folgenden Iteration wird abhängig von den letzten bestimmten Messwerten, den entsprechenden geschätzten Größen, der Verstärkung des Beobachters in der laufenden Iteration und vom Zustand in der folgenden Iteration geschätzt in der laufenden Iteration aktualisiert.

3. Verfahren nach Anspruch 2, wobei die Dynamik des Beobachters erhöht wird, indem die Werte der Rausch-Kovarianzmatrix des Systems erhöht werden.

4. Verfahren nach Anspruch 2, wobei die Präzision des Beobachters trotz der Schnelligkeit erhöht wird, indem die Werte der Kovarianzmatrix von Messrauschen erhöht werden.

**Claims**

1. Method for controlling a synchronous electric machine with a wound rotor for an electric or hybrid motor vehicle, including steps during which:

the currents and voltages are measured in the rotor and stator phases of the machine in a fixed three-phase reference frame linked to the stator,
the currents and voltages are determined in the rotor and stator phases in a fixed two-phase reference frame linked to the stator according to the current and voltage measurements in the three-phase reference frame,
the method includes steps during which the position and speed of the rotor are determined with respect to the stator by an observer according to the stator and rotor currents and voltages expressed in the fixed two-phase reference frame linked to the stator,
the observer is adjusted by a discrete extended version of a Kalman algorithm,
the method is **characterized in that**, when the speed is below a threshold, a high-frequency, low intensity current is injected into the rotor winding, in order to make the system observable, then the position and speed are determined thanks to the extended version of the Kalman algorithm.

2. Method according to Claim 1, in which adjusting the observer by a discrete extended version of a Kalman algorithm includes the following steps:

during a prediction phase, the state of the system and the covariance matrix of the error associated with the next iteration estimated at the current iteration are determined, according to the uncertainty covariance matrix of the system at the current iteration, the covariance matrix of the error on the state at the current iteration, the state estimated at the current iteration and the linearized system at the current iteration,
the gain of the observer is determined at the current iteration according to the covariance matrix of the error on the state at the next iteration estimated at the current iteration, the covariance matrix of measurement noise at the current iteration and the linearized system at the current iteration, and

the state of the system at the next iteration is updated according to the latest determined measurements, the corresponding estimated quantities, the gain of the observer at the current iteration, and the state at the next iteration estimated at the current iteration.

3. Method according to Claim 2, in which the dynamics of the observer are increased by increasing the values of the covariance matrix of noise of the system.

4. Method according to Claim 2, in which the accuracy of the observer is increased in spite of the speed, by increasing the values of the covariance matrix of measurement noise.

# FIG.1

Axe de
référence

θ

Axe
rotor

$i_a$

$v_a$

$i_f$

$v_f$

$v_b$

$i_b$

$v_c$

$i_c$

# FIG.2

Axe de
référence

θ

Axe d

$i_d$

$i_f$

$i_q$

Axe q

# FIG.3

## RÉFÉRENCES CITÉES DANS LA DESCRIPTION

**Documents brevets cités dans la description**

- US 20130289934 A1
- US 20070194742 A1
- CN 102983806
- CN 102437813
- US 2005007044 A